(19) **Europäisches Patentamt European Patent Office Office européen des brevets**

(11) **EP 3 974 614 B1**

(12) **FASCICULE DE BREVET EUROPEEN**

(45) Date de publication et mention de la délivrance du brevet:
**22.02.2023 Bulletin 2023/08**

(21) Numéro de dépôt: **21197960.4**

(22) Date de dépôt: **21.09.2021**

(51) Classification Internationale des Brevets (IPC):
**G01K 7/42** *(2006.01)*   **G01K 7/01** *(2006.01)*
**E06B 9/68** *(2006.01)*   **H02S 40/40** *(2014.01)*
**E06B 9/11** *(2006.01)*   **E06B 9/24** *(2006.01)*

(52) Classification Coopérative des Brevets (CPC):
**E06B 9/68; G01K 7/01; G01K 7/427; H02S 40/40;**
E06B 9/11; E06B 2009/2476; E06B 2009/6809;
E06B 2009/6827; G01K 2217/00; Y02E 10/50

(54) **PROCÉDÉ ET SYSTÈME DE MESURE DE TEMPÉRATURE AU MOYEN D'UN MODULE PHOTOVOLTAÏQUE**

VERFAHREN UND SYSTEM ZUR MESSUNG DER TEMPERATUR ANHAND EINES PHOTOVOLTAIKMODULS

METHOD AND SYSTEM FOR MEASURING TEMPERATURE BY MEANS OF A PHOTOVOLTAIC MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2020 FR 2009735**

(43) Date de publication de la demande:
**30.03.2022 Bulletin 2022/13**

(73) Titulaires:
• **Commissariat à l'Energie Atomique et aux Energies Alternatives**
**75015 Paris (FR)**
• **BHG**
**68220 Attenschwiller (FR)**

(72) Inventeurs:
• **CHAINTREUIL, Nicolas**
**38054 GRENOBLE CEDEX 09 (FR)**
• **RENZI, Virginie**
**38054 GRENOBLE CEDEX 09 (FR)**

(74) Mandataire: **Cabinet Beaumont**
**4, Place Robert Schuman**
**B.P. 1529**
**38025 Grenoble Cedex 1 (FR)**

(56) Documents cités:
DE-A1-102013 219 494    FR-A1- 2 966 942
FR-A1- 2 966 943    FR-A1- 3 060 634

**Description**

Domaine technique

La présente description concerne de façon générale les systèmes intégrant des modules photovoltaïques, et vise plus particulièrement un procédé et un système de mesure de température au moyen d'un module photovoltaïque.

Technique antérieure

De nombreux systèmes comprenant un ou plusieurs modules photovoltaïques configurés pour alimenter une charge, par exemple une batterie électrique, ont été proposés.

Dans de nombreuses situations, il peut être souhaitable de mesurer une température au sein du système, par exemple en vue de commander en conséquence un élément du système.

Pour ce faire, on prévoit de façon classique une sonde de température dédiée à cette mesure.

L'intégration d'une telle sonde au sein du système peut toutefois poser des difficultés.

Les documents DE102013219494, FR2966943, FR2966942 et FR3060634 décrivent des exemples de systèmes comportant des modules photovoltaïques.

Résumé de l'invention

Un mode de réalisation prévoit un procédé de mesure de température dans un système comportant un module photovoltaïque et un dispositif électronique de contrôle, comprenant les étapes suivantes :

    a) mesurer la tension en circuit ouvert $V_{oc}$ du module photovoltaïque ;

    b) mesurer le courant de court-circuit $I_{sc}$ du module photovoltaïque, en fonction de la valeur de la tension en circuit ouvert $V_{oc}$ mesurée à l'étape a) et de la valeur du courant de court-circuit $I_{sc}$ mesurée à l'étape b).

Selon un mode de réalisation, à l'étape c), la valeur T est calculée par le dispositif électronique de contrôle suivant la relation suivante :

[Math 6]

$$T = a(I_{sc}) \cdot V_{oc} + b(I_{sc}),$$

où a et b sont des fonctions polynomiales prédéfinies d'ordres supérieurs ou égaux à 1.

Selon un mode de réalisation, a et b sont des fonctions polynomiales d'ordre 2 définies comme suit :

[Math 7]

$$a = a_{cd} \cdot I_{sc}^2 - b_{cd} \cdot I_{sc} - c_{cd}$$

[Math 8]

$$b = a_{oo} \cdot I_{sc}^2 - b_{oo} \cdot I_{sc} - c_{oo}$$

où $a_{cd}$, $b_{cd}$, $c_{cd}$, $a_{oo}$, $b_{oo}$, et $c_{oo}$ sont des coefficients fixes prédéterminés.

Selon un mode de réalisation, les coefficients des fonctions polynomiales sont déterminés lors d'une phase préalable de calibration et stockés dans une mémoire d'un dispositif électronique de contrôle du module.

Selon un mode de réalisation, le procédé comprend en outre une étape de calcul, au moyen du dispositif électronique de contrôle, à partir de la valeur T calculée à l'étape c), d'une valeur $T_{ext}$ représentative de la température ambiante extérieure au module photovoltaïque.

Selon un mode de réalisation, la valeur $T_{ext}$ est calculée par le dispositif électronique de contrôle à partir de la valeur T suivant une relation polynomiale d'ordre supérieur ou égal à 1.

Selon un mode de réalisation, la valeur $T_{ext}$ est calculée par le dispositif électronique de contrôle suivant la relation suivante :

[Math 9]

$$T_{ext} = a_r \cdot T + b_r$$

où $a_r$ et $b_r$ sont des coefficients fixes prédéterminés.

Selon un mode de réalisation, le procédé comporte en outre une étape de commande d'un élément commandable électriquement du système en tenant compte de la valeur de température calculée à l'étape c).

Un autre mode de réalisation prévoit un système comprenant un module photovoltaïque et un dispositif électronique de contrôle configuré pour mettre en oeuvre un procédé tel que défini ci-dessus.

Selon un mode de réalisation, le système comprend un dispositif d'occultation motorisé alimenté par le module photovoltaïque.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en perspective illustrant de façon schématique un exemple d'un système intégrant un module photovoltaïque ;

la figure 2 représente de façon schématique, sous forme de blocs, un exemple d'un système de mesure de température selon un mode de réalisation ; et

la figure 3 représente de façon schématique, sous forme de blocs, un exemple d'un procédé de mesure de température selon un mode de réalisation.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits de contrôle et de traitement adaptés à mettre en oeuvre les procédés décrits n'ont pas été détaillés, la réalisation de tels circuits étant à la portée de la personne du métier à partir des indications de la présente description. En outre, la réalisation des modules photovoltaïques des systèmes décrits n'a pas été détaillée, les modes de réalisation étant compatible avec tous ou la plupart des modules photovoltaïques connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un dispositif dans une position normale d'utilisation.

Sauf précision contraire, les expressions "environ", "approximativement", "sensiblement", et "de l'ordre de" signifient à 10 % près, de préférence à 5 % près.

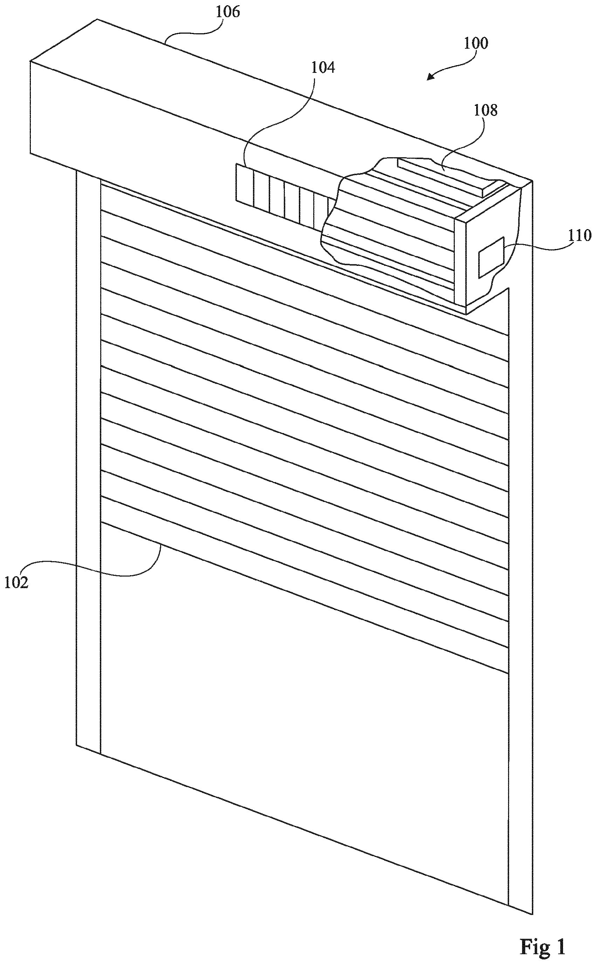

La figure 1 est une vue en perspective illustrant de façon schématique un exemple d'un système 100 intégrant un module photovoltaïque.

Dans cet exemple, le système 100 est un dispositif d'occultation motorisé de type volet roulant.

Le dispositif 100 comporte un tablier 102 constitué par un assemblage de plusieurs lames, et comporte en outre un arbre motorisé (non visible sur la figure 1) sur lequel peut être enroulé le tablier 102 et à partir duquel peut être déroulé le tablier 102.

Le dispositif 100 comporte en outre un générateur photovoltaïque ou module photovoltaïque 104, comportant un ou plusieurs panneaux photovoltaïques. A titre d'exemple, le dispositif 100 comporte un caisson 106 dans lequel est disposé l'arbre motorisé, le ou les panneaux photovoltaïques du module photovoltaïque 104 étant disposés sur le caisson 106.

Le dispositif 100 comporte de plus une batterie électrique 108 alimentée en énergie électrique par le module photovoltaïque 104 et alimentant en énergie électrique le dispositif 100, et en particulier le moteur d'entrainement (non visible sur la figure 1) de l'arbre d'enroulement du tablier 102. A titre d'exemple, la batterie 108 est disposée dans le caisson 106.

Le dispositif 100 comporte en outre un dispositif électronique de contrôle 110, permettant notamment de commander le moteur du dispositif. A titre d'exemple, le dispositif de contrôle 110 est disposé à l'intérieur du caisson 106.

Le dispositif électronique de contrôle 110 peut comprendre divers capteurs, ainsi qu'un circuit électronique de traitement des données mesurées par les capteurs. A titre d'exemple, le circuit électronique de traitement comprend une unité de traitement de type microcontrôleur, et peut en outre comprendre un ou plusieurs circuits mémoire.

Le dispositif d'occultation 100 est destiné à être monté devant une ouverture (non visible sur la figure 1) d'un bâtiment, apte à laisser passer la lumière, par exemple devant une fenêtre équipée d'une vitre transparente.

Dans cet exemple, le dispositif électronique de contrôle 110 est configuré pour mettre en oeuvre un procédé de commande automatique dit intelligent du dispositif d'occultation, tenant compte notamment de l'irradiation solaire et de la température extérieure. Un tel procédé permet de gérer les apports solaires dans le bâtiment, par exemple en privilégiant l'ouverture des volets exposés au soleil lorsque les températures extérieures sont basses, et/ou en fermant les volets les volets exposés au soleil lorsque les températures extérieures sont élevées.

L'irradiation solaire peut être estimée par le dispositif électronique de contrôle 110 en mesurant le courant de court-circuit du module photovoltaïque 104.

La température extérieure peut quant à elle être mesurée au moyen d'une sonde de température. La prévision d'une telle sonde induit toutefois un coût supplémentaire. De plus, l'intégration d'une telle sonde dans le dispositif 100 peut présenter des difficultés.

Selon un aspect d'un mode de réalisation, on prévoit d'utiliser le module photovoltaïque 104 pour estimer la température.

Pour cela, le dispositif de contrôle 110 est configuré pour, lors d'une phase de mesure de température, mesurer la tension en circuit ouvert $V_{oc}$ du module photovoltaïque 104, mesurer le courant de court-circuit $I_{sc}$ du module photovoltaïque 104, puis calculer une valeur T représentative de la température du module photovoltaïque 104, en fonction de la valeur de la tension en circuit ouvert $V_{oc}$ et de la valeur du courant de court-circuit $I_{sc}$.

Les inventeurs ont déterminé que quelle que soit la valeur de l'irradiation solaire, pour autant que cette dernière soit non négligeable, par exemple supérieure ou égale à 10 W/m$^2$, de préférence supérieure ou égale à 50 W/m$^2$, et plus préférentiellement encore supérieure ou égale à 100 W/m$^2$, il existe, pour chaque valeur d'irradiation solaire, une relation sensiblement linéaire entre la température T du module photovoltaïque 104 et sa tension de circuit ouvert $V_{oc}$, de la forme :

[Math 1]

$$T = a \cdot V_{oc} + b$$

où a et b sont des coefficients variant en fonction de l'irradiation solaire $I_{rr}$.

L'irradiation solaire $I_{rr}$ peut elle-même être déterminée en mesurant le courant de court-circuit $I_{sc}$ du module photovoltaïque. En effet, pour un module photovoltaïque donné, le courant de court-circuit $I_{sc}$ du module varie linéairement en fonction de l'irradiation solaire $I_{rr}$.

Les inventeurs ont déterminé que le coefficient directeur a de l'équation Math 1 ci-dessus peut être approximé à partir du courant de court-circuit $I_{sc}$ du module, par la relation polynomiale d'ordre 2 suivante :

[Math 2]

$$a = a_{cd} \cdot I_{sc}^{\,2} - b_{cd} \cdot I_{sc} - c_{cd}$$

où $a_{cd}$, $b_{cd}$ et $c_{cd}$ sont des coefficients fixes dépendants uniquement des caractéristiques du module photovoltaïque 104.

De façon similaire, l'ordonnée à l'origine b de l'équation Math 1 ci-dessus peut être approximée à partir du courant de court-circuit $I_{sc}$ du module, par la relation polynomiale d'ordre 2 suivante :

[Math 3]

$$b = a_{oo} \cdot I_{sc}^{\,2} - b_{oo} \cdot I_{sc} - c_{oo}$$

où $a_{oo}$, $b_{oo}$ et $c_{oo}$ sont des coefficients fixes dépendants uniquement des caractéristiques du module photovoltaïque 104.

Ainsi, la température estimée T du module photovoltaïque 104 peut être calculée par le dispositif de contrôle 110, selon la relation suivante :

[Math 4]

$$T = \left(a_{cd} \cdot I_{sc}{}^2 - b_{cd} \cdot I_{sc} - c_{cd}\right) \cdot V_{oc} + \left(a_{oo} \cdot I_{sc}{}^2 - b_{oo} \cdot I_{sc} - c_{oo}\right)$$

La tension $V_{oc}$ et le courant $I_{sc}$ peuvent être mesurés respectivement par un capteur de tension et par un capteur de courant du dispositif électronique de contrôle 110. Le dispositif de contrôle 110 peut par ailleurs comprendre des interrupteurs commandables pour mettre le module photovoltaïque en circuit ouvert lors de la mesure de la tension $V_{oc}$ et en court-circuit lors de la mesure du courant $I_{sc}$.

Les coefficients $a_{cd}$, $b_{cd}$, $c_{cd}$, $a_{oo}$, $b_{oo}$ et $c_{oo}$ peuvent être déterminés lors d'une phase de calibration, à la conception du module photovoltaïque 104, puis stockés dans une mémoire du dispositif de contrôle 110. Pour déterminer les coefficients $a_{cd}$, $b_{cd}$, $c_{cd}$, $a_{oo}$, $b_{oo}$ et $c_{oo}$, le module 104 peut être placé sur un banc de calibration permettant de faire varier l'irradiation et la température. On vient alors balayer la plage des valeurs d'irradiation auxquelles le module est susceptible d'être soumis en conditions réelles d'utilisation. Pour chaque valeur d'irradiation, on fait varier la température de façon à balayer la plage des températures que peut prendre le module en conditions réelles d'utilisation. Pour chaque valeur d'irradiation et pour chaque valeur de température, on mesure la tension de circuit ouvert $V_{oc}$ du module et on détermine le courant de court-circuit $I_{sc}$ du module. Les coefficients $a_{cd}$, $b_{cd}$, $c_{cd}$, $a_{oo}$, $b_{oo}$ et $c_{oo}$ sont ensuite déterminés par régression polynomiale d'ordre 2 à partir des mesures réalisées.

Le procédé décrit ci-dessus permet d'estimer, à partir d'une simple mesure de la tension de circuit ouvert $V_{oc}$ et du courant de court-circuit $I_{sc}$ du module photovoltaïque 104, la température T du module, et ce par un calcul simple nécessitant des ressources calculatoires limitées et pouvant aisément être mise en oeuvre par un circuit électronique de contrôle embarqué d'un système intégrant le module photovoltaïque.

En pratique, la température T du module photovoltaïque varie en fonction de la température ambiante extérieure $T_{ext}$. La relation entre la température T et la température $T_{ext}$ peut être approximée par une relation linéaire. Le dispositif électronique de contrôle 110 est par exemple configuré pour calculer une estimation de la température ambiante extérieure

$T_{ext}$ à partir de la température estimée T du module photovoltaïque, par la relation suivante :

[Math 5]

$$T_{ext} = a_r \cdot \mathrm{T} + b_r$$

où $a_r$ et $b_r$ sont des coefficients constants dépendant de l'installation considérée, représentant offset de température et un déphasage thermique entre le module photovoltaïque et l'environnement extérieur.

La température $T_{ext}$ peut par exemple être calculée par le dispositif de contrôle 110 pour l'application susmentionnée de pilotage intelligent du volet roulant.

Les coefficients $a_r$ et $b_r$ peuvent être déterminés lors d'une phase préalable de calibration à la conception ou à l'installation du système, par régression linéaire à partir de données mesurées empiriquement, et stockés dans une mémoire du dispositif électronique de contrôle 110.

La méthode décrite ci-dessus permet d'obtenir une estimation précise de la température T du module photovoltaïque et/ou de la température ambiante extérieure $T_{ext}$ du module, directement à partir de mesures de signaux électriques de courant et de tension aux bornes du module. On peut ainsi se passer d'une sonde de température dédiée à ces mesures.

Les modes de réalisations décrits ne se limitent pas à l'application susmentionnée à un système de type volet roulant motorisé. Plus généralement, la solution proposée peut s'appliquer à tout système comprenant un module photovoltaïque, et dans lequel on souhaite pouvoir mesurer la température du module et/ou de son environnement extérieur. Par exemple, le module photovoltaïque peut être installé sur un toit d'un bâtiment. La température T du module peut par exemple être exploitée par un dispositif électronique de contrôle pour actionner des mécanismes de protection, par exemple pour éviter des surchauffes. La température $T_{ext}$ de l'environnement extérieur peut quant à elle être exploitée par un dispositif électronique de contrôle pour piloter de façon automatique un système de chauffage ou de refroidissement du bâtiment, ou, simplement transmise à l'utilisateur via un dispositif d'affichage électronique, pour information.

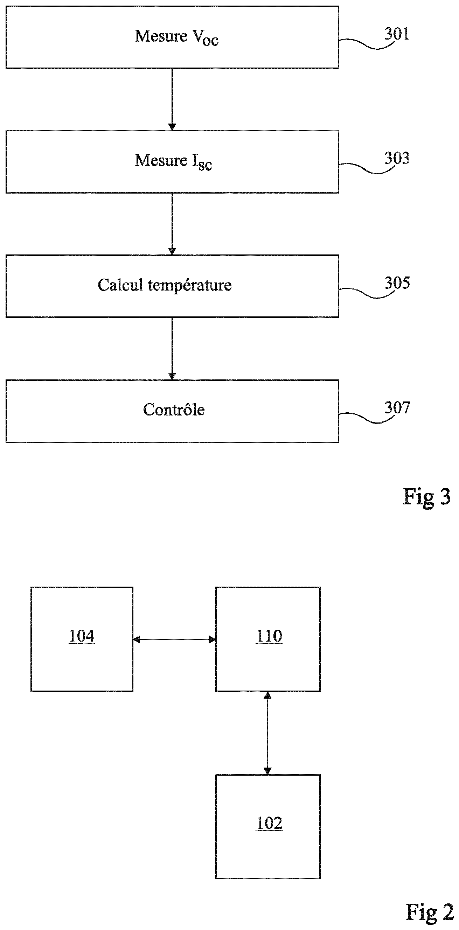

La figure 2 représente de façon schématique, sous forme de blocs, un exemple d'un système 100 de mesure de température selon un mode de réalisation. Le système 100 de la figure 2 peut être un système du type décrit en relation avec la figure 1, ou, plus généralement, tout système intégrant un module photovoltaïque 104. Le système 100 comprend un dispositif électronique de contrôle 110 relié au module photovoltaïque 104 et adapté à mesurer la tension de circuit ouvert $V_{oc}$ et le courant de court-circuit $I_{sc}$ du module. Le dispositif électronique de contrôle 110 est en outre relié à un élément commandable électriquement 102 du système. Le dispositif électronique 110 est configuré pour estimer la température T du module photovoltaïque 104 et/ou la température extérieure $T_{ext}$ à partir de la tension $V_{oc}$ et du courant $I_{sc}$, et commander en conséquence l'élément 102.

La figure 3 représente de façon schématique, sous forme de blocs, un exemple d'un procédé de mesure de température selon un mode de réalisation, mis en oeuvre par le dispositif électronique de contrôle 110 dans un système du type décrit en relation avec la figure 2.

Le procédé comprend une étape 301 de mesure de la tension de circuit ouvert $V_{oc}$ du module 104, suivie d'une étape 303 de mesure du courant de court-circuit $I_{sc}$ du module. En pratique, l'ordre des étapes 301 et 303 peut être inversé.

Le procédé comprend en outre, après les étapes 301 et 303, une étape 305 de calcul de la température T du module et/ou de la température ambiante $T_{ext}$ de l'environnement à partir de la tension $V_{oc}$ et du courant $I_{sc}$, tel que décrit ci-dessus en relation avec la figure 1.

Le procédé comprend en outre, après l'étape 305, une étape 307 de contrôle d'un élément 102 du système en tenant compte de la température calculée à l'étape 305.

Divers modes de réalisation et variantes ont été décrits. En particulier, les modes de réalisation décrits ne se limitent pas aux exemples d'applications mentionnés explicitement ci-dessus, mais peuvent être adaptés à tout système intégrant un module photovoltaïque et dans lequel on peut tirer profit d'une mesure de température du module photovoltaïque et/ou de son environnement.

En outre, la personne du métier comprendra que certaines des équations mathématiques susmentionnées peuvent être adaptées en fonction de l'application et de la précision requise. Ainsi, par exemple, pour accroître la précision de l'estimation de la température T du module, les coefficients a et b de l'équation Math 1 susmentionnés pourront être exprimés et calculés par une relation polynomiale d'ordre supérieur à 2. A l'inverse, si une précision élevée n'est pas nécessaire et pour simplifier les calculs à mettre en oeuvre par le dispositif électronique de contrôle 110, les coefficients a et b peuvent être exprimés par une relation polynomiale d'ordre 1 (relation linéaire). De façon similaire, pour accroître la précision de l'estimation de la température ambiante extérieure $T_{ext}$, l'approximation linéaire exprimée par l'équation Math 5 susmentionnée peut être remplacée par une approximation polynomiale d'ordre supérieur ou égal à 2.

## Revendications

1. Procédé de mesure de température dans un système comportant un module photovoltaïque (104) et un dispositif électronique de contrôle (110), comprenant les étapes suivantes :

   a) mesurer (301) la tension en circuit ouvert $V_{oc}$ du module photovoltaïque ;
   b) mesurer (303) le courant de court-circuit $I_{sc}$ du module photovoltaïque ; et
   c) calculer (305), au moyen d'un dispositif électronique de contrôle (110), une valeur T représentative de la température du module photovoltaïque, en fonction de la valeur de la tension en circuit ouvert $V_{oc}$ mesurée à l'étape a) et de la valeur du courant de court-circuit $I_{sc}$ mesurée à l'étape b),
   **ledit procédé étant caractérisé en ce que,**
   à l'étape c), la valeur T est calculée par le dispositif électronique de contrôle (110) suivant la relation suivante :

   [Math 6]

   $$T = a(I_{sc}) \cdot V_{oc} + b(I_{sc}),$$

   où a et b sont des fonctions polynomiales prédéfinies d'ordres supérieurs ou égaux à 1,
   et dans lequel les coefficients desdites fonctions polynomiales sont déterminés lors d'une phase préalable de calibration et stockés dans une mémoire d'un dispositif électronique de contrôle (110) du module.

2. Procédé selon la revendication 1, dans lequel a et b sont des fonctions polynomiales d'ordre 2 définies comme suit :

   [Math 7]

   $$a = a_{cd} \cdot I_{sc}^2 - b_{cd} \cdot I_{sc} - c_{cd}$$

[Math 8]

$$b = a_{oo} \cdot I_{sc}^2 - b_{oo} \cdot I_{sc} - c_{oo}$$

où $a_{cd}$, $b_{cd}$, $c_{cd}$, $a_{oo}$, $b_{oo}$, et $c_{oo}$ sont des coefficients fixes prédéterminés.

3. Procédé selon la revendication 1 ou 2, comprenant en outre une étape de calcul, au moyen du dispositif électronique de contrôle (110), à partir de la valeur T calculée à l'étape c), d'une valeur $T_{ext}$ représentative de la température ambiante extérieure au module photovoltaïque (104).

4. Procédé selon la revendication 3, dans lequel la valeur $T_{ext}$ est calculée par le dispositif électronique de contrôle (110) à partir de la valeur T suivant une relation polynomiale d'ordre supérieur ou égal à 1.

5. Procédé selon la revendication 3 ou 4, dans lequel la valeur $T_{ext}$ est calculée par le dispositif électronique de contrôle (110) suivant la relation suivante :

[Math 9]

$$T_{ext} = a_r \cdot T + b_r$$

où $a_r$ et $b_r$ sont des coefficients fixes prédéterminés.

6. Procédé selon l'une quelconque des revendications 1 à 5, comportant en outre une étape de commande d'un élément commandable électriquement (102) du système en tenant compte de la valeur de température calculée à l'étape c).

7. Système (100) comprenant un module photovoltaïque (104) et un dispositif électronique de contrôle (110) configuré pour mettre en oeuvre un procédé selon l'une quelconque des revendications 1 à 6.

8. Système (100) selon la revendication 7, comprenant un dispositif d'occultation motorisé alimenté par le module photovoltaïque (104).

**Patentansprüche**

1. Verfahren zur Temperaturmessung in einem System, das ein Photovoltaikmodul (104) und eine elektronische Steuervorrichtung (110) aufweist, wobei das Verfahren die folgenden Schritte aufweist:

a) Messen (301) der Leerlaufspannung $V_{oc}$ des Photovoltaikmoduls;
b) Messen (303) des Kurzschlussstroms $I_{sc}$ des Photovoltaikmoduls; und
c) Berechnen (305), mittels einer elektronischen Steuervorrichtung (110), eines Wertes T, der für die Temperatur des Photovoltaikmoduls repräsentativ ist, und zwar in Abhängigkeit von dem Wert der im Schritt a) gemessenen Leerlaufspannung $V_{oc}$ und dem Wert des im Schritt b) gemessenen Kurzschlussstroms $I_{sc}$,

wobei das Verfahren **dadurch gekennzeichnet ist, dass** im Schritt c) der Wert T von der elektronischen Steuervorrichtung (110) gemäß der folgenden Beziehung berechnet wird:

[Math 6]

$$T = a(I_{sc}) \cdot V_{oc} + b(I_{sc}),$$

wobei a und b vordefinierte Polynomfunktionen mit Ordnungen größer oder gleich 1 sind, und wobei die Koeffizienten der Polynomfunktionen während einer vorherigen Kalibrierungsphase bestimmt und in einem Speicher einer elektronischen Steuervorrichtung (110) des Moduls gespeichert werden.

2. Verfahren nach Anspruch 1, wobei a und b Polynomfunktionen der Ordnung 2 sind, die wie folgt definiert sind:

[Math 7]

$$a = a_{cd} \cdot I_{sc}^2 - b_{cd} \cdot I_{sc} - c_{c}$$

[Math 8]

$$b = a_{oo} \cdot I_{sc}^2 - b_{oo} \cdot I_{sc} - c_{oo}$$

wobei acd, bcd, ccd, aoo, boo und coo vorgegebene feste Koeffizienten sind.

3. Verfahren nach Anspruch 1 oder 2, das ferner einen Schritt aufweist, bei dem mittels der elektronischen Steuervorrichtung (110) aus dem in Schritt c) berechneten Wert T ein Wert $T_{ext}$ berechnet wird, der für die Umgebungstemperatur außerhalb des Photovoltaikmoduls (104) repräsentativ ist.

4. Verfahren nach Anspruch 3, wobei der Wert $T_{ext}$ von der elektronischen Steuervorrichtung (110) aus dem Wert T gemäß einer polynomischen Beziehung der Ordnung größer oder gleich 1 berechnet wird.

5. Verfahren nach Anspruch 3 oder 4, wobei der Wert $T_{ext}$ von der elektronischen Steuereinrichtung (110) nach der folgenden Beziehung berechnet wird

[Math 9]

$$T_{ext} = a_r \cdot T + b_r$$

wobei $a_r$ und $b_r$ vorbestimmte feste Koeffizienten sind.

6. Verfahren nach einem der Ansprüche 1 bis 5, das ferner einen Schritt der Steuerung eines elektrisch steuerbaren Elements (102) des Systems unter Berücksichtigung des in Schritt c) berechneten Temperaturwerts aufweist.

7. System (100) mit einem Photovoltaikmodul (104) und einer elektronischen Steuervorrichtung (110), die zur Durchführung eines Verfahrens nach einem der Ansprüche 1 bis 6 konfiguriert ist.

8. System (100) nach Anspruch 7, umfassend eine motorisierte Abschirmvorrichtung, die von dem Photovoltaikmodul (104) angetrieben wird.

**Claims**

1. Method for measuring temperature in a system including a photovoltaic module (104) and an electronic control device (110), comprising the following steps:

   a) measuring (301) the open-circuit voltage $V_{oc}$ of the photovoltaic module;
   b) measuring (303) the short-circuit current $I_{sc}$ of the photovoltaic module; and
   c) calculating (305), by means of an electronic control device (110), a value T representative of the temperature of the photovoltaic module, as a function of the value of the open-circuit voltage $V_{oc}$ measured in step a) and of the value of the short-circuit current $I_{sc}$ measured in step b),

   said method being **characterized in that**, in step c), the value T is calculated by the electronic control device (110) according to the following relationship:

[Math 6]

$$T = a(I_{sc}) \cdot V_{oc} + b(I_{sc}),$$

where a and b are predefined polynomial functions of orders greater than or equal to 1,
and wherein the coefficients of said polynomial functions are determined during a previous calibration phase and stored in a memory of an electronic control device (110) of the module.

2. The method according to claim 1, wherein a and b are polynomial functions of order 2 defined as follows:

[Math 7]

$$a = a_{cd} \cdot I_{sc}^2 - b_{cd} \cdot I_{sc} - c_{cd}$$

[Math 8]

$$b = a_{oo} \cdot I_{sc}^2 - b_{oo} \cdot I_{sc} - c_{oo}$$

where acd, bcd, ccd, aoo, boo, and coo are predetermined fixed coefficients.

3. The method according to claim 1 or 2, further comprising a step of calculating, by means of the electronic control device (110), from the value T calculated in step c), a value $T_{ext}$ representative of the ambient temperature external to the photovoltaic module (104).

4. The method according to claim 3, wherein the value $T_{ext}$ is calculated by the electronic control device (110) from the value T according to a polynomial relation of order greater than or equal to 1.

5. The method according to claim 3 or 4, wherein the value $T_{ext}$ is calculated by the electronic control device (110) according to the following relationship:

[Math 9]

$$T_{ext} = a_r \cdot T + b_r$$

where $a_r$ and $b_r$ are predetermined fixed coefficients.

6. The method according to any one of claims 1 to 5, further comprising a step of controlling an electrically controllable element (102) of the system by taking account of the temperature value calculated in step c).

7. System (100) comprising a photovoltaic module (104) and an electronic control device (110) configured to implement a method according to any one of claims 1 to 6.

8. The system (100) according to claim 7, comprising a motorized screening device powered by the photovoltaic module (104) .

Fig 1

```
┌─────────────────────────────────┐
│          Mesure V_OC            │ ⟋ 301
└─────────────────────────────────┘
                │
                ▼
┌─────────────────────────────────┐
│          Mesure I_SC            │ ⟋ 303
└─────────────────────────────────┘
                │
                ▼
┌─────────────────────────────────┐
│        Calcul température        │ ⟋ 305
└─────────────────────────────────┘
                │
                ▼
┌─────────────────────────────────┐
│            Contrôle             │ ⟋ 307
└─────────────────────────────────┘
```

Fig 3

```
┌──────────┐         ┌──────────┐
│   104    │◄───────►│   110    │
└──────────┘         └──────────┘
                          ▲
                          │
                          ▼
                     ┌──────────┐
                     │   102    │
                     └──────────┘
```

Fig 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102013219494
- FR 2966943
- FR 2966942
- FR 3060634